Europäisches Patentamt

(19) European Patent Office

Office européen des brevets

(11) EP 0 715 738 B1

## (12) EUROPEAN PATENT SPECIFICATION

(45) Date of publication and mention
of the grant of the patent:
**28.11.2001 Bulletin 2001/48**

(21) Application number: **94924643.3**

(22) Date of filing: **26.08.1994**

(51) Int Cl.[7]: **G06F 3/05**, G05B 23/02,
G07C 3/00

(86) International application number:
**PCT/AU94/00502**

(87) International publication number:
**WO 95/06289 (02.03.1995 Gazette 1995/10)**

(54) **INTERPRETIVE MEASUREMENT INSTRUMENT**

INTERPRETATIONSMESSINSTRUMENT

INSTRUMENT DE MESURE INTERPRETATIF

(84) Designated Contracting States:
**AT BE CH DE DK ES FR GB GR IE IT LI LU MC NL PT SE**

(30) Priority: **26.08.1993 AU PM085493**

(43) Date of publication of application:
**12.06.1996 Bulletin 1996/24**

(73) Proprietor: **ASSOCIATIVE MEASUREMENT PTY. LTD.**
**North Ryde, NSW 2113 (AU)**

(72) Inventor: **OATES, John, David**
**Quakers Hill, NSW 2763 (AU)**

(74) Representative: **Altenburg, Udo, Dipl.-Phys. et al**
**Patent- und Rechtsanwälte**
**Bardehle . Pagenberg . Dost . Altenburg .**
**Geissler . Isenbruck**
**Postfach 86 06 20**
**81633 München (DE)**

(56) References cited:
**WO-A-91/10961**
**WO-A-94/11821**
**GB-A- 1 371 369**
**US-A- 4 707 796**
**US-A- 4 796 194**
**US-A- 5 101 337**
**US-A- 5 133 046**
**US-A- 5 325 082**

**WO-A-91/14562**
**FR-A- 2 698 704**
**US-A- 4 298 955**
**US-A- 4 730 259**
**US-A- 4 931 951**
**US-A- 5 119 318**
**US-A- 5 140 523**

**EP 0 715 738 B1**

**Description**

The present invention relates to scientific instruments and, in particular, to an interpretative measurement instrument which enables various measurements to be taken and the results interpreted to provide a diagnostic or predictive conclusion.

BACKGROUND ART

In many fields of activity having a scientific basis, scientific instruments are used to analyse, record, and monitor the outputs of various devices. Such devices include strain gauges, electro-cardiograph (ECG) devices, microphones, and pressure, temperature, flow rate and like transducers. Accordingly, such scientific instruments are used in civil engineering, electrical engineering, acoustics, hydraulic engineering, chemical processes, bio-medical engineering and so on.

A wide range of such scientific instruments are generally required in order to undertake desired measurements. Such instruments include generators for various wave-forms (such as sine, square, ramp, and triangle); signal processing devices such as differentiators, integrators, filters, multipliers, and so on; analysers such as that required to carry out the Fast Fourier Transform, and various recording devices such as a chart recorder, a data logger, a cathode ray oscilloscope or a transient recorder.

Alternatively, the desired measurements can be undertaken utilising a scientific instrument emulator as disclosed in the specification of WO-A-92/15959 assigned to the present applicant.

The known scientific Instrument emulator comprises computer means including memory means and processors, an input/output analogue signal module having analogue signal input and one digital output, a video display screen and a video display generator connected therewith, a library program stored in said memory and including a plurality of instrumentation units, wherein said instrumentation units are each represented by a corresponding icon which is able to be displayed on said video display screen and each instrumentation unit having a predetermined signal processing function.

SUMMARY OF THE INVENTION

The object of the present invention is the assessment or interpretation of the data which results from such measurements and from the described embodiments.

This object is achieved by the subject matter of claims 1 and 11.

The present invention discloses a means whereby various parameters measured in the course of taking the measurements, can be advantageously interpreted to provide a diagnostic or predictive conclusion.

In accordance with one aspect of the present invention there is disclosed an interpretative measurement instrument as specified in claim 1.

According to another aspect of the present invention there is disclosed a method as specified in claim 11.

DESCRIPTION OF THE DRAWINGS

Three embodiments of the present invention will now be described with reference to the drawings in which:

Fig. 1 duplicates Fig. 1 of the above mentioned PCT specification and illustrates a schematic block diagram of the hardware modifications required to an IBM PC,
Fig. 2 duplicates Fig. 2 of the above mentioned PCT specification and is a block diagram of the analog module of Fig. 1,
Fig. 3 is similar to Fig. 6 of the above mentioned PCT specification and is a screen display listing the icons representing various instrumentation units,
Fig. 4 is a block diagram of the circuit array used to both obtain and interpret the desired measurement data,
Fig. 5 shows a modification to the arrangement of Fig. 4 in order to cater for additional parameters to be measured,
Fig. 6 is a block diagram similar to Fig. 4 but of a circuit array of a second embodiment which uses the ID3 algorithm to classify numbers,
Fig. 7 is a reproduction of a screen display resulting from the use of the emulated circuit of Fig. 6,
Fig. 8 is a schematic arrangement of a feedback system using a neural network to maintain substantially constant the temperature of a kiln which receives articles for firing at irregular time intervals,
Fig. 9 is a block diagram similar to Figs. 4 and 6 but of an emulated feedback circuit to control the kiln of Fig. 8, and
Fig. 10 is a schematic representation of the neural network represented by the icon NN of Fig. 9.

DETAILED DESCRIPTION

The first embodiment of the present invention will be described in relation to the maintenance of electric motors, for example those used in electric trains. It is to be understood that the following example is illustrative of the principles of the invention only.

In conducting a, say, weekly maintenance check during a routine service, certain parameters of each motor are measured and recorded to provide a set of parameters which indicate the state of the particular motor at the particular time. Hitherto these parameters have been interpreted by an expert skilled in the maintenance of electric motors who must determine whether or not certain parts should be replaced. The dilemma faced by the expert is essentially one of cost which must be balanced against safety and/or inconvenience. If parts are replaced or repaired but do not need this action, the cost of maintaining the electric motors is unnecessarily high. If, however, parts that should have been replaced or repaired are not replaced or repaired and subsequently fail, then this failure will cause inconvenience, additional expense, and possibly even an accident.

The set of parameters measured for each motor at each weekly service is as follows:

1. Peak Stator current during acceleration (SiMax)
2. Peak Rotor current during acceleration (RiMax)
3. Peak audible noise in dB measured during acceleration (AMax)
4. Average vibratition acceleration on motor chassis measured using an accelerometer (ChAvg)
5. The change in parameter 1 since the motor was last replaced (SiAlt)

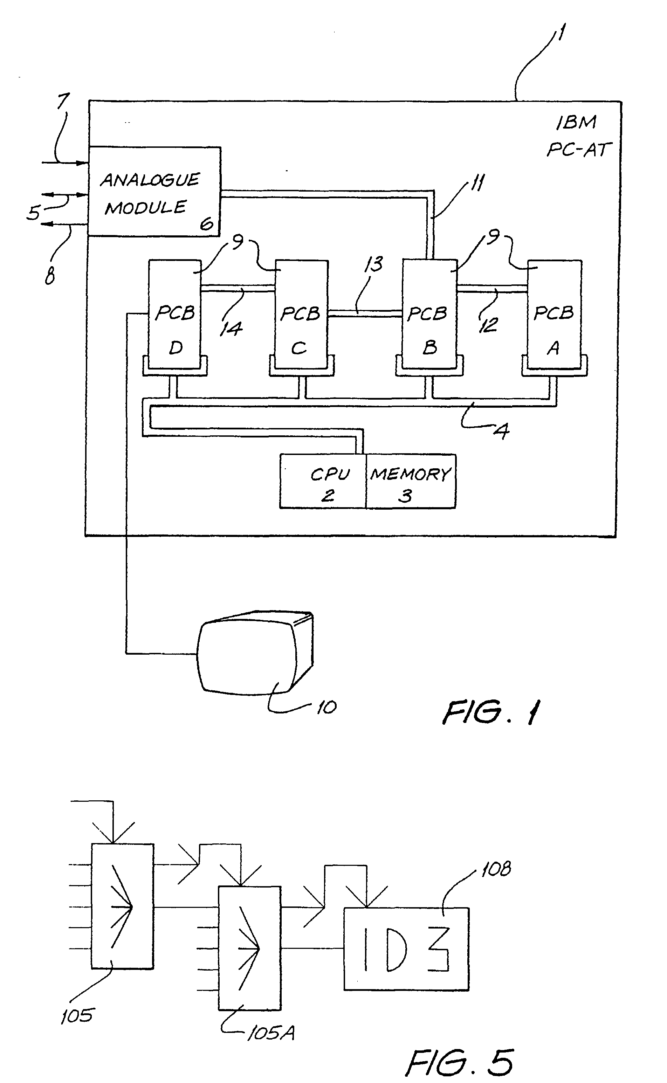

The measurement is preferably carried out using the apparatus of the above mentioned PCT specification which, as illustrated in Fig. 1, is able to be totally enclosed within the case 1 of a conventional IBM (Registered Trade Mark) Personal Computer having an ISA or EISA bus based on the original IBM AT. Located within the case 1 are the usual components of a central processing unit (CPU) 2, memory 3 and 8MHz bus 4.

Located within a spare 5¼ inch floppy disc nacelle is an analogue module 6 onto which are mounted dedicated input plugs 7, dedicated output plugs 8, and general input/output lines 5 for amplifiers, frequency counters, sample clock synchronising, digital inputs and the like.

Located on the bus 4 are four slots for printed circuit boards 9. The four PC boards 9 are indicated A, B, C and D respectively. The three adjacent PCB's A to C inclusive are respectively a master PCB, a slave PCB and a video PCB. The video PCB in turn drives a known VGA printed circuit board D which can provide, for example, 1024 x 780 resolution in 256 colours. This PC board D is directly connected to the video display screen 10.

Within the analogue module 6 are located the following system resources:

1 FOUR isolated (optional) analog i/p channels. Each channel has programmable 9-120dB gain (3 micro volts resolution @ signal to noise ratio of one), programmable anti-alias filtering and an ADC conversion of 12 bit resolution. Each channel can be AC or DC coupled with long AC coupling time constants (2 minutes) and has independent controls of AC or DC offsets which can be controlled from the runtime screens. The sampling rate can be 15 KHz per channel (depending on the project processing load) and the number of analog modules attached to the same slave processor card. The inputs are isolated to 3.5KV RMS continuous.

2 TWO analog outputs with a voltage range of +/-10 Volts and a current capacity of +/- 100mA. These can be used for strain gauge biasing (AC or DC driven), control outputs etc.

3 FOUR selectable high level analogue outputs, one from each of the amplifiers above. These drive digital FM tape recorders to store rarely occurring events for replay into the processor (2).

OR

FOUR selectable high level inputs to each of the amplifier channels above. The system is switched into this mode for replay of events captured in output mode on tape.

4 EIGHT bits of ground referenced digital input.

5 EIGHT bits of digital output which can be used for relay drivers or event indicators.

6 ONE frequency generator output (clock generator) 0-2 MHz 0.1% accuracy.

7 ONE event counter/frequency counter. Input 0.1Hz-8MHz.

8 ONE 5 Volt reference 100mA +/- 5%. (For strain gauges etc.)

9 ONE sample clock output reference line for synchronising sampling between multiple scientific instrument emulators of the preferred embodiment.

10 ONE sample clock input reference line for synchronising sampling from a "master" scientific instrument emulator (for use with "slave" emulators), and

11 FIVE ground wires.

The analogue module 6 and PC boards 9 are each interconnected by means of different subsidiary buses 11, 12, 13 and 14 respectively.

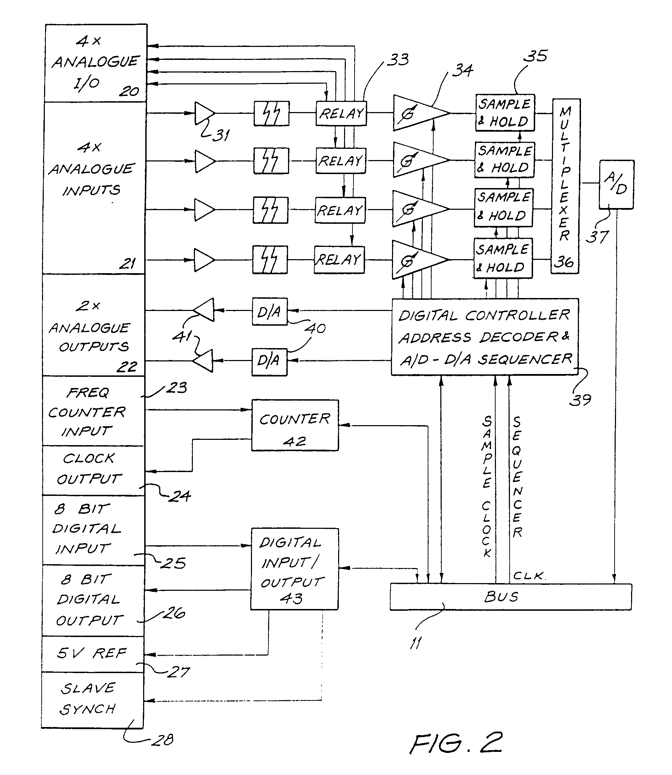

As seen in Fig. 2, the analogue module 6 of Fig. 1 is provided with four analogue input/output connectors 20, four analogue inputs 21, two analogue outputs 22, a frequency output counter input 23, a clock output 24, an 8 bit digital input 25, an 8 bit digital output 26, a five volt reference voltage 27 and a slave synchronizing output 28.

Each of the analogue inputs 21 is connected via a front end amplifier 31 to an isolator 32, the output of which is connected to a relay 33. The relay 33 is also connected to the analogue input/output connectors 20 and to an amplifier 34 which has programmable gain, AC/DC coupling, provision for an AC corner and DC offset. The output of the amplifier 34 is in turn passed to a sample and hold circuit 35 the output of which is received by an analogue multiplexer 36. The output of the multiplexer 36 is passed via an A/D converter 37 to the subsidiary bus 11 which connects the analogue modules 6 and the PC board 9B.

The operation of the amplifiers 34 and the sample and hold circuits 35 is controlled by a digital controller, address decoder and A/D-D/A sequencer 39 which receives both data from the bus 11 and also sample clock and sequencer clock signals. The controller/decoder/sequencer 39 also outputs via D/A converters 40 to the analogue outputs 22 via an output amplifier 41.

The frequency counter input 23 and clock output 24 respectively directly communicate with a counter 42 which again communicates directly with the subsidiary bus 11.

Each of the digital inputs 25, digital outputs 26, reference voltage 27 and slave synchronizing output 28 is connected to a digital input/output circuit 43 which is in turn directly connected to the subsidiary bus 11.

The timing arrangements of the circuit illustrated in Fig. 2 are divided into two sequences. The first sequence concerns the digital input and output. When required by the program, this digital input and output is effected by individual commands from a substantially conventional data acquisition controller which forms part of the slave processor on PCB 9B (Fig. 1).

The second sequence is the flow of digital data converted from the analogue inputs, or to be converted to provide the analog outputs. This digital data is received and despatched under the control of the controller/decoder/ sequencer 39 which can be preset to operate the required number of incoming and outgoing analogue channels. The controller/decoder/sequencer 39 performs one complete cycle of inputting and outputting, or sequence, every sample period and does so with minimal processor involvement, thus increasing the speed of operation of the data acquisition controller referred to above on the slave processor of PCB 9B.

Other functions of the circuit of Fig. 2, such as the frequency to be output as the clock output 24, the "range" of the frequency to be counted by the frequency counter input 23, and any synchronisation signal required for the slave synchronising signal 28, are set up at the start of the execution of the graphical compiler program by appropriately specifying the corresponding icon.

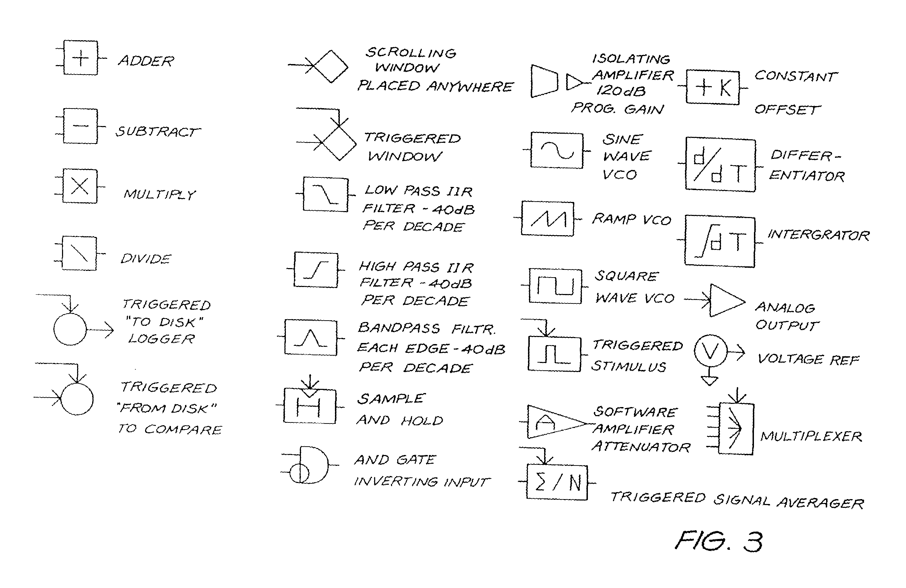

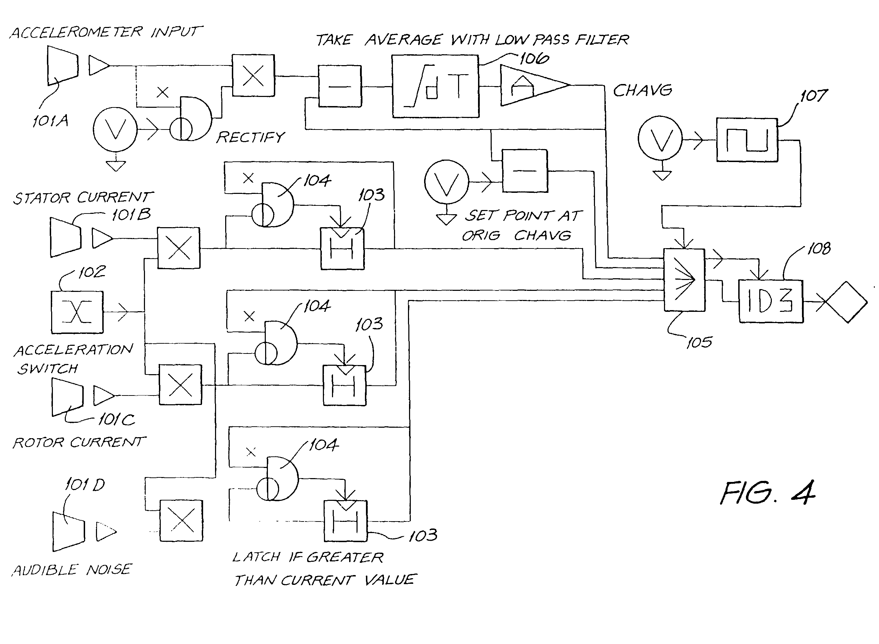

Utilising the various icons indicated in Fig. 3, an array as illustrated in Fig. 4 is created in accordance with the principles described in the above mentioned PCT specification. Once the array has been interconnected to the satisfaction both of the operator and the set-up program used during this phase, a compiler program is then run which compiles from the graphical representation of the array the executable object code which executes the overall signal processing function for the entire array. As a consequence, when, in real time, the input signal is applied to the array, the incoming signal(s) is/are manipulated and the one or more outputs of the array are indicated in real time on the video windows able to be displayed on the screen 10, stored to disc, and so on.

It will be apparent to those skilled in the electronic arts that the above described array emulates an electric circuit having four inputs each connected via a corresponding one of four isolating amplifiers 101A-101D. These correspond to the first four parameters referred to above to be measured. An acceleration switch 102 is provided to trigger the measurement of stator current, rotor current and audible noise. In order to provide peak measurements, a latching arrangement, in the form of a sample and hold circuit 103 and logic gate 104, is provided for each of these outputs. The peak output is then passed to a corresponding input of a multiplexer 105. The output of the accelerometer is averaged utilising a low pass filter formed from an integrater 106 placed in a feed back loop. Again the output is passed to the multiplexer 105.

The multiplexer 105 is triggered from the square wave voltage controlled oscillator 107 to form a vector at the end of the epoch. Thus the period of the output of oscillator 107 determines the length of the epoch. When the trigger occurs, the values on each of the five inputs to the multiplexer 105 are clocked through on the next occurring sequential five sample periods. The trigger is delayed by the same five clock periods.

The data on the various lines can be regarded as forming a data vector. In the initial release of the machine described in the above mentioned patent application, the data vector is formed from the data available on the first line at a first sample time, the data available on the second data line at a second sample period, and so on. This accounts for the above described delayed triggering arrangements.

However, in a later release of the machine having an improved speed performance, it is possible for the data on all, say, five inputs or lines to be simultaneously clocked through. Thus under these circumstances the data vector constitutes all the data available at each sample period. It is therefore possible to carry out a classification for each sample period rather than each sequence of sample periods.

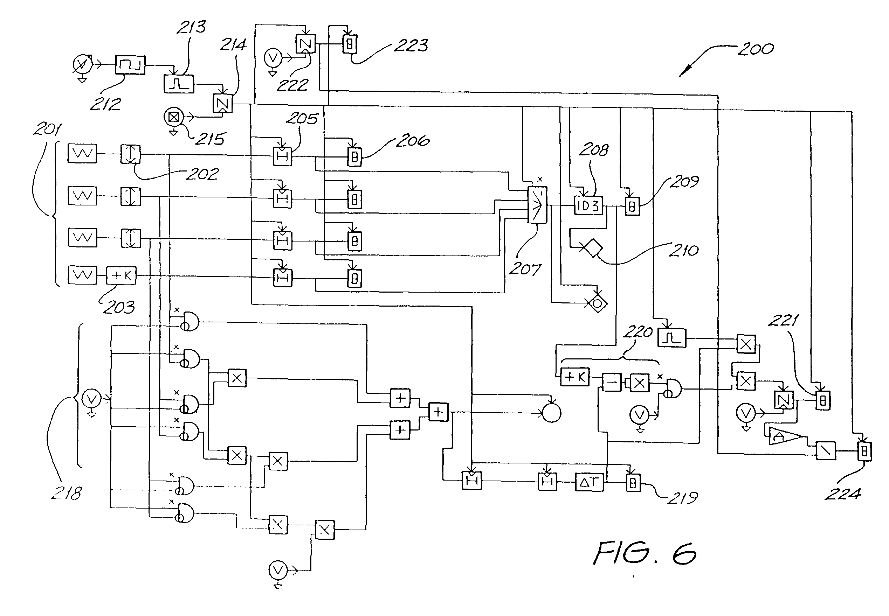

As indicated in Fig. 5, if additional parameters are required, then one or more further multiplexers 105A, etc can be provided in a cascade connection. Here, the value on the topmost input of multiplexer 105A is directed straight through to the output of the multiplexer 105A. This arrangement allows the multiplexers 105 and 105A to be cascaded to form a data stream with values of the different parameters clocked through on successive sample periods.

As seen in Fig. 4, the multiplexer 105 inputs to an ID3 icon 108. This is able to be set into two different modes. In the first mode data is collected and in the second mode a decision tree algorithm created by the ID3 algorithm is run.

With the ID3 icon 108 set into the data collection mode, the results of tests conducted at various dates for various motors can be collected. The results are illustrated in the following table.

TABLE 1

| Test | SiMax | RiMax | AMax | ChAvg | SiAlt | Classification |
|------|-------|-------|------|-------|-------|----------------|
| DD/MM/YY,#n | Amps | Amps | dB | m/sec$^2$ | Amps | |
| 27/01/92,#1 | 120 | 25 | 100 | 23 | - | No Failure |
| 27/01/92,#2 | 111 | 26 | 110 | 10 | - | No Failure |
| 28/01/92,#3 | 130 | 30 | 105 | 30 | 10 | Rotor Jammed |
| etc | | | | | | |

The first column in Table 1 is simply the date of the test and the number of the motor tested. The next five columns are the results of the five parameters and the final column is a classification which indicates the historical outcome. Typical classifications for this column are as follows:

1. Replace entire Motor
2. Rewind Stator
3. Replace Rotor
4. Do nothing.

This classification can be arrived at in either one of three ways. Firstly, the action of the above mentioned expert and the instructions he issued on the basis of the measured parameters could be used as the basis for the classification. This will generate a decision tree or other classification procedure (to be explained hereafter) that will replicate the experience of this expert. This method has the advantage that it does not require any procedural changes to allow data to be collected. A major disadvantage, however, is that the result derived from the data will never be any better than the human expert.

Alternatively, the historical outcome of the maintenance carried out during the previous week could be used to determine the classification. If a certain part of the motor fails during normal operation, then the type of failure is attributed as the classification of the data collected for that particular motor on the previous maintenance measurement. This has the advantage of allowing the decision tree procedure to account for any mistakes made by the expert. It has a definite disadvantage, however, in that it is preferable for no maintenance to be carried out on the motors during the period between measurements. If a motor is repaired, then the number of examples of failures associated with a particular measured parameter, may be missed as it is unknown as to whether or not the suspect part would have failed. Not repairing the motors, however, could cause safety problems. The types of classifications generated with this alternative method can be as follows:

1. Motor burnt out
2. Rotor jammed
3. Stator insulation failed
4. No failures.

A third classification method is to use both the methods outlined above. Effectively this adds a correction to the expert's classifications due to known outcomes.

Irrespective of the classification method used, a collection of historical results and the corresponding classifications as indicated in Table 1 above, is available.

A decision tree procedure is then applied to the historical results in order to build a decision tree. A typical resulting decision tree is as follows:

```
        Is SiAlt greater than or equal to 10?
            |    yes    |    no
            |           |
            |           Is RiMax greater than 35?
            |           |    yes         |    no
            |           |                |
            |           |                No failure expected
            |           |
            |           Is AMax greater than 120
            |           |    yes         |    no
            |           |                |
            |           |                No failure expected
            |           Rotor will jam
            |
        Is SiMax greater than 128?
            |    yes    |    no
            |           |
            |           Is ChAvg greater than 28?
            |           |    yes         |    no
            |           |                |
            |           |                No failure expected
            |           |
            |           Motor will burn out
            |
        Motor will burn out.
```

Once the decision tree has been produced, this is then stored in implementable form in the computer memory. It is then possible to switch the ID3 icon 108 into the second of its two modes. Under these circumstances, when a set of measurements is next undertaken for a particular motor, the measured values are conveyed via the multiplexer 105 to the ID3 icon 108. The ID3 icon 108 then applies the decision tree to the resulting data and arrives at a result, such as "no failure will occur", or "the rotor will jam", which is predictive of the expected outcome based upon the historical accumulation of knowledge which is expressed in the decision tree. Based upon the result obtained from applying the decision tree to historical data not used in building the tree, a confidence level can be calculated or ascribed to a particular outcome. This enables an insurance company to have a numerical basis by means of which the risk of plant failure can be determined. This results in the potential for lower insurance premiums.

The ID3 icon 108 is realised in terms of software since it would be inpractically expensive to purchase, and interconnect, hardware gates which duplicated this program function. The ID3 algorithm is itself known per se from Quinlan Jr. INDUCTION OF DECISION TREES. Machine Learning 1(1) pp81-106, 1986.

The ID3 algorithm is based on the well publicised algorithm for calculating the entropy, or disorder, H within a system with two outcomes and "n" classifications:

$$H = W_1 \sum_{i=0}^{n} - p_1(i) \log_2 p_1(i) + W_2 \sum_{i=0}^{n} - p_2(i) \log_2 p_2(i)$$

where

$$W_1 = N_1/(N_1 + N_2) \text{ and } W_2 = N_2/(N_1 + N_2)$$

$N_1$ = number of examples in outcome 1

$N_2$ = number of examples in outcome 2

n = number of classes

$P_1(i)$ = number of examples in class i with outcome 1 divided by the total number of examples in class i

$P_2(i)$ is as for $P_1(i)$ but for outcome 2 rather than outcome 1

This calculation is known to work well in noisy environments. The tree building procedure uses the above formula to trial numerous possible decisions. The decision which decreases the entropy to the greatest extent is chosen. The examples are then divided on this decision and two new decisions are then found to further break the example sets down. This process is continued until either an entropy of zero is reached or no decision can be found that will result in a further reduction in entropy.

Included within the disclosure of the present application is the use of the C4 procedure (known per se) to prune or otherwise refine the decision tree created utilising the ID3 procedure.

It will be apparent that the above described arrangement provides an enormous benefit. This is that the one device is used both to collect the data used to derive the decision making tree, and to collect the data on the basis of which the interpretive decision is to be made. As a consequence, all systemic sources of error are eliminated since both types of data are collected in the same environment.

Therefore a prior problem which had always existed: namely the problem of possible, and indeed probable, conditioning of the historical data of the example set, not being the same as the conditioning of the data of the measurement, is overcome. Such conditioning of data can arise as a result of various mechanisms such as filtering, timing, sampling, triggering and so on.

Indeed, not only is a discrepancy between the historical data and the actual measurement data avoided by using the same machine (the scientific instrument emulator) to collect the data and to conduct the measurement, but also any variations of the above type amongst the historical data set itself are also eliminated.

This uniformity of data capture and measurement is guaranteed because the array can be stored within the machine memory and thus the array itself, the settings of any icons requiring settings, and like information is able to be stored in the same memory record as the data itself. The preferred mechanism for this data storage is for the program to specify new entries in prior art data bases known per se such as VBX, OLE, dBase, Paradox and Retrieve (Trade Marks). This can be done "in background" without requiring any specific action by the user. As a consequence any difference between measurements take on one occasion and measurements taken on another occasion can be eliminated.

Further, the implementation of the interpretative measurement can be regarded as involving two or more of the following phases:

(A) acquisition of example data at one or more earlier time periods termed "epochs",
(B) the application of the classification system to build up the "expertise" inherent in the classification procedure which is ultimately derived from the historical data, and
(C) the taking of a predictive measurement by applying the classification procedure in real time to data being acquired in the source of the measurement procedure.

Because phases A and C above take place in the same circuit array and thus have the same connectivity and operate in a repeatable fashion, the above described advantage of elimination of systemic error from both the historical data and the current measurement is able to be achieved.

Furthermore, another advantage is also able to be achieved. This is that each measurement taken can be used to add a further data result to the existing set of historical data. This means that use of the machine to make predictive or interpretive measurements is able to add to the experience of the machine. Such processing activities can be performed on either currently measured or previously stored data and interpretations provided in real time (i. e. before the next epoch). Such a process is essential to machine learning. The machine architecture as described enables this process to be carried out.

Similarly, the classification expertise within the machine is available for application or modification whilst a new measurement is being undertaken and data recorded and without interrupting that data acquisition. In the first instance the classification system is applied to the newly collected data. This is phase C in operation. However, the newly acquired data can also be used to modify the existing classification procedure based on the addition data measured and from that time the modified classification procedure can be used. This use can be either in respect of new data (phase C) or in respect of the latest data used to modify the classification procedure (phases B and C in sequence).

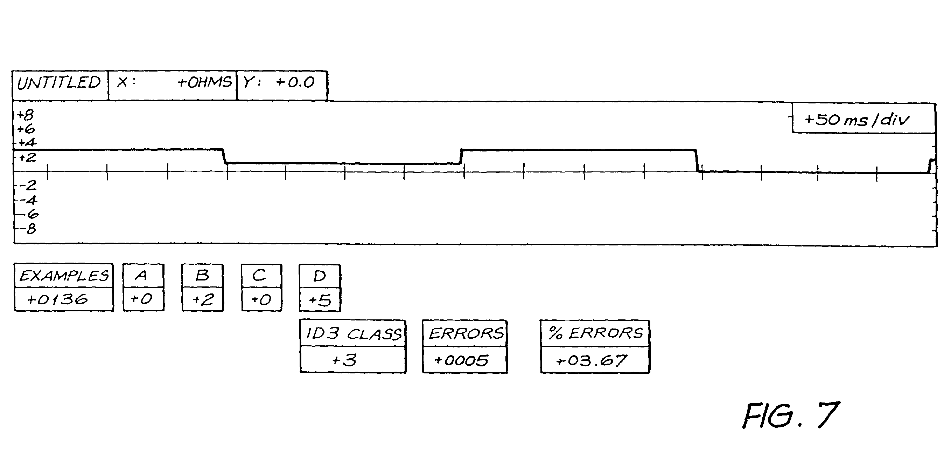

Referring now to the second embodiment to be described in relation to Fig. 6 and 7, this embodiment relates to a circuit to classify numbers into four classes based upon the magnitude of the number. If the number has a magnitude only of units, then it is classified in class 1, if the magnitude is in the tens, then it is classified as class 2, if the magnitude is in the range of hundreds, then it is classified as class 3 and finally if the magnitude is in the range of thousands then it is classified as class 4. Clearly the range of numbers is limited to four digit numbers in this embodiment.

The classifying circuit 200 is emulated by the array or block diagram illustrated in Fig. 6. The numbers themselves are generated by means of four white noise generators 201 which each consist of a pseudo random number generator the output of which is coupled to a limiter 202 in the case of the digits representing thousands, hundreds and tens. Since each of the white noise generators 201 has a mean value of zero averaged over a long period of time, the white noise generator 201 for the units is connected to an offsetting voltage generator 203 to give a value which is centred about the magnitude 5.

The output from each of the number generators is passed in two directions. In the first "horizontal" direction the output is passed through a sample and hold circuit 205 and thence to a numeric display 206. The four numeric displays 206 have an output which is indicated in Fig. 7 as A, B, C and D respectively with the display A representing the thousands and the display D representing the units.

The outputs from the sample and holds circuits 205 are also connected as inputs to a multiplexer 207 the output of which is operated upon by the ID3 classifier 208. The result of the ID3 classification is both displayed in a numeric display 209 (labelled "ID3class" in Fig. 7). In addition, the output of the ID3 classifier 208 is also displayed by means of a visual display 210 which constitutes the graphical output of Fig. 7.

Appearing above the white noise generators 201 in Fig. 6 is a timing and counting circuit which determines the rate at which measurements are taken and also determines the epoch or period of time over which the accumulation of parameters occurs. Essentially this circuit comprises a variable frequency square wave generator 212, a triggering circuit 213 and a counter 214. The output of the counter 214 is used as a triggering signal throughout the circuit in order to ensure synchronism. The maximum count permitted by the counter 214 is able to be determined via a check box input 215. This determines the length of the epoch which can vary in different applications between one sample and a large number of samples. Such an input enables non-acquired data to be entered in order to be utilised in the classification procedure. Such non-acquired or non-measured data can include a patient's age, gender, skin colour, geographic residence, nominal voltage, nominal frequency of a mains supply voltage, type of machine, age of machine, lubrication grade, and the like.

The output from the number generator is also passed "vertically" into a logic network 218 which by means of various logic gates calculates a control or check classification against which the classification generated by the ID3 classifier 208 can be compared. The result of the classification calculated by the logic network 218 appears at the numeric display 219. This control result appears in the box headed "ID3class" in Fig. 7.

The classification as determined by the logic network 218 and the classification as determined by the ID3 classifier 208 are each input into a comparator circuit 220 in order to enable an error to be calculated and displayed in numerical display 221. This display appears under the heading "Errors" in Fig. 7. In addition, by means of a counter 222, a total number of examples is able to be displayed in numeric display 223 and a percentage error is also able to be counted and displayed in numeric display 224.

The results of operation of the circuit of Fig. 6 are illustrated in Fig. 7. The graph represents the output of the visual display 210 which appears as the level 3 given at the left hand side of the trace of the graph of Fig. 7. The four consecutive previous samples produce the results of 1, 3, 0 and 2 respectively.

The information for the current sample is given in the boxes immediately below the graph or trace. The sample is number 136 of a sequence of samples and the number generated for that particular sample by the white noise generators 201 has the numerical value 205. It is correctly classified by the ID3 classifier 208 as being in class 3 (i.e. hundreds) and this is as indicated in Fig. 7. However, the ID3 classifier 208 is not completely error free and it will be seen in the number of 136 samples or examples to date there have been five errors detected by the logic network 218 which gives a percentage error rate of 3.67.

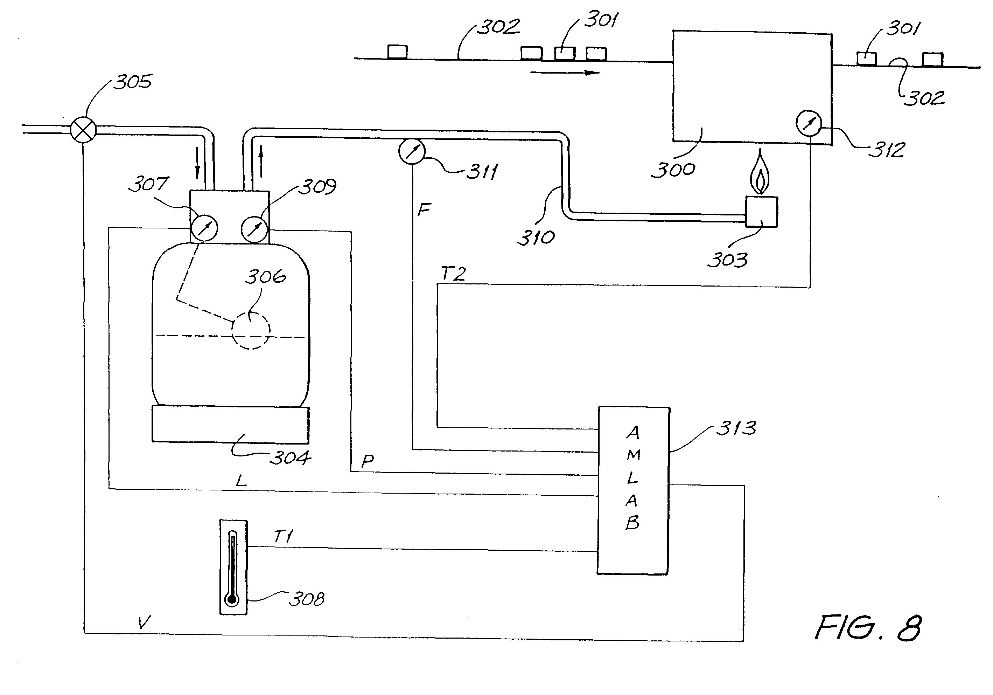

Turning now to Figs. 8 to 10, a third embodiment of the present invention, in this instance incorporating a neural network rather than an ID3 decision tree will now be described. Here the classification procedure is used in a feedback network which is utilised to maintain essentially constant the temperature of a kiln 300 which receives for firing articles 301 which are transported into and out of the kiln 300 by means of a conveyor 302. Since the articles 301 are not regularly spaced on the conveyor 302, the heat demand of the kiln, and hence the kiln temperature, varies according to the spacing of the articles 301 on the conveyor 302.

The kiln 300 has a gas fired burner 303 which is supplied by gas from a gas supply bottle 304 which is in turn replenished from a gas supply (not illustrated) by means of an inlet valve 305 which is either open or closed. The inlet valve 305 is typically a solenoid operated valve.

The gas bottle 304 is supplied with a float arm 306 (illustrated in phantom) which operates a level indicator 307 which indicates the level L of liquefied gas within the gas bottle 304. This level L is to some extent dependent upon ambient temperature T1 which is indicated by a temperature sensor 308. The gas bottle is also provided with a pressure sensor 309 to indicate the pressure P. The pipe 310 which interconnects the gas bottle 304 and gas burner 303 includes a flow transducer 311 which measures the rate of flow F of gas to the burner 303. The kiln 300 is also provided with a temperature sensor 312 so as to provide a signal which is indicative of the temperature T2 of the kiln 300. The outputs of the various sensors and transducers are connected to the AMLAB (Registered Trade Mark) interpretive measurement instrument 313 which is used to both sense and control the electrical signal V which determines whether the inlet valve 305 is open or closed.

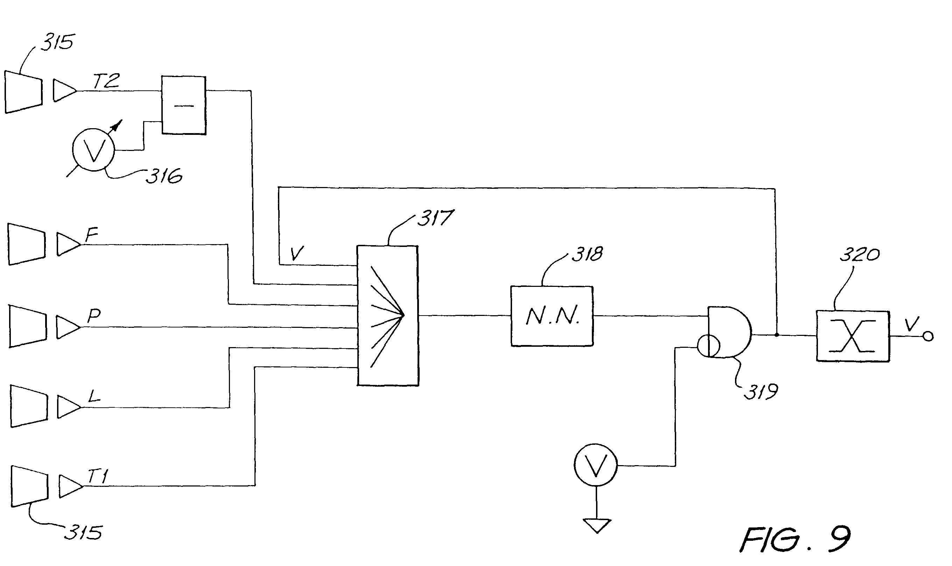

Turning now to Fig. 9, a circuit emulation which produces the desired feedback results is illustrated in which an isolating amplifier 315 is connected to each of the transducers 307, 308, 309, 311 and 312. A voltage reference source 316 is used to determine the temperature to which the kiln temperature is to be controlled. This voltage reference is subtracted from the output of the temperature sensor 312 in order to provide a control signal as to whether the temperature of the kiln 300 should be increased or decreased. The various electrical inputs are connected to a multiplexer 317, the output of which is connected to a neural network icon 318. The output of the neural network icon 318 is passed via a logic gate 319 to an input to the multiplexer 317. This signal completes the feedback path and is also digitised by means of quantizer 320 in order to provide an on-off signal to the inlet valve 305.

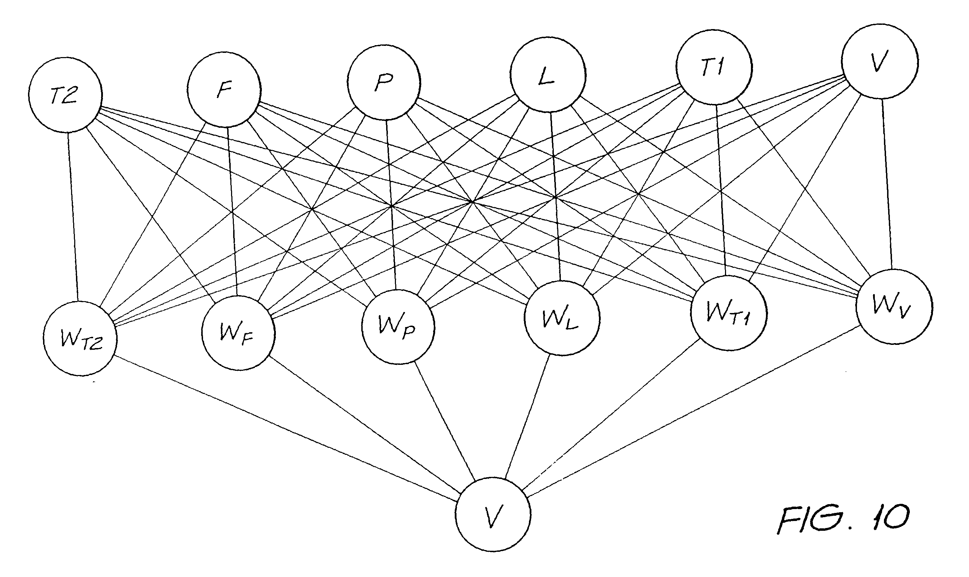

The neural network represented by the neural network icon 318 is schematically illustrated in Fig. 10 as a three layer perceptron, the representation being adapted from Hinton and Sejnowski (1987). The inputs to the neural network respectively consist of the kiln temperature T2 (or the difference between that temperature and its desired control figure), the flow rate F of the gas in the pipe 310 leading to the gas burner 303, the gas pressure P within the gas bottle 304, the level L of liquefied gas within the gas bottle 304, the ambient temperature T1, and whether the inlet valve 305 is open. Each of these signals is weighted in accordance with a predetermined weighting W and the output of the neural network is a signal indicating whether the inlet valve 305 should be opened or closed.

It will be apparent from the above description of the three embodiments that there are three circumstances in which the classification procedure is able to be applied. The first such circumstance is where it is possible to only have one outcome over a whole range of input data. For example, whether the train motor is to be replaced in accordance with the particular measurements taken of the motor characteristics. Under these circumstances, there is only one outcome and there is also only one data sample for each session.

In the second circumstance there is a set of conditions which initiates a sampling that extends over a certain time period. This gives rise to there being a single classification or example for each event. Examples include that the monitoring, say, every fifteen seconds of a continuous flow and deciding as a result of the monitoring if there is a flow or a blockage. A further example might include detecting whether a pump was still working and the presence or absence of cavitation in the liquid being pumped. If cavitation were detected then the pump power would be reduced. A further example of this circumstance is the number magnitude detection carried out in the second embodiment.

The third type of circumstance is where a classification in accordance with the classification procedure is made in every sample period. In particular, this enables the classification procedure to be used in a control loop and the third embodiment exemplifies this circumstance.

Although detailed embodiments of an ID3 classification procedure and a neural network classification procedure have been given, the present invention is equally applicable to other types of classification procedures which incorporate fuzzy logic, rule based expert systems, or logistic regression. All of these types of classification procedure are applicable in the continuous data stream environment in which the data collection, classification and interpretive measurement are carried out.

The above described embodiments exemplify two features of the present invention which substantially enhance its effectiveness as an interpretive instrument. These are as follows:

    1. Data of different types can be captured simultaneously. The data can be as diverse as colour, image amplitude, acidity (pH) or temperature. This can be easily achieved since all sensor inputs are sampled simultaneously in a tightly coupled hardware architecture which involves no communication delays which would otherwise stagger the commencement and termination of epochs. Similarly, the display abilities of the instrument are such that synchronous data is displayed at high refresh rates for synchronous epoch periods for selected sample sets. The selection of a sample set can be made at the commencement of the measurements taken to create the sample set.

2. There are two processing regimes which determine the final output and are completed within a known and repeatable time period irrespective of the combination of input states. The first of these operates at the basic sample rate and enables the signal processing to be carried out. The second operates at the epoch rate, for example to run the classification procedure. In iterative control systems or diagnostic systems incorporating the interpretive measurement instrument, the classification procedure should occur sufficiently frequently for system stability. The epoch rate is normally slower than the sample rate. However, the epoch rate and the sample rate can be the same. This applies especially with increasing example sets as occur in "machine learning" situations.

Such an interpretive instrument is inherently expandable in its capabilites and a multiprocess or architecture as described is ideally suited for this since it is operable within an IBM PC environment, which is now the world's most widely used computing machine.

The foregoing describes only some embodiments of the present invention and modifications, obvious to those skilled in the art, can be made thereto without departing from the scope of the present invention as claimed.

## Claims

1. An interpretive measurement instrument comprising computer means (1) including a memory means (3), a screen display means (10) and at least one processor (2), an input analogue to digital conversion means (35-37) having a plurality of analogue signal inputs each with digitising means connected thereto and forming a corresponding digital output, signal routing means connected to said digital outputs to convey the data thereon to said memory means, said signal routing means being represented by said computer means as a number of interconnected icons (101-108; 201-224; 315-320) on said screen display means in which the interconnections between said icons represent signal paths and the icons represent functional elements each having a predetermined signal processing task, **characterised in that** a classification program (108,318) is embedded in said signal routing means and is operable on said conveyed data to calculate an interpretive conclusion based on said conveyed data, wherein said classification program utilises historical data stored in said memory and entered therein via said analogue signal inputs and signal routing means, and the same signal processing is utilised both for said historical data and for data on which an interpretive measurement is to be performed, thereby substantially eliminating data conditioning errors.

2. An instrument as claimed in claim 1, wherein said memory means receives said conveyed data and supplements said historical data with same to thereby increase said historical data with each measurement taken.

3. An instrument as claimed in claim 2, wherein said classification program is modified by the cumulative historical data stored in said memory means.

4. An instrument as claimed in claim 2 or 3, wherein said memory means is divided into epoch portions and said conveyed data is allocated into different epoch portions of said memory means based upon the time or times during which said conveyed data was generated.

5. An instrument as claimed in any one of claims 1 - 4, wherein said signal routing means comprises a multiplexer means (105) to form a data vector having data values formed from data digitised by said digitising means on sequential samples.

6. An instrument as claimed in any one of claims 1 - 4, wherein said signal routing means comprises a multiplexer means (105) to form a data vector having data values formed from data digitised by said digitising means on simultaneous samples.

7. An instrument as claimed in any one of claims 1 - 8, wherein said signal routing means includes non-measured data input means whereby data conveyed to said memory includes data not input via said analogue signal inputs.

8. An instrument as claimed in any one of claims 1 - 7, wherein said classification program is embedded in a feedback and/or control loop forming part of said signal routing means.

9. An instrument as claimed in any one of claims 1 - 9, wherein said classification program is selected from the group consisting of ID3 decision trees and neural networks.

10. An instrument as claimed in any one of claims 1 - 8, wherein said classification program incorporates logic selected from the group consisting of fuzzy logic, rule based expert systems and logistic regression.

11. A method of calculating an interpretive conclusion from a measured set of parameters using an interpretive measurement instrument as defined in claim 1, said method comprising the steps of:

a) interconnecting a plurality of said icons to form said signal routing means,
b) forming a collection of previous measurement data each comprising a set of said parameters measured via said signal routing means at a particular time,
c) allocating a result to each of said sets in said collection,
d) creating a classification procedure using said collection and storing same in the instrument memory,
e) measuring a further set of said parameters via said signal routing means,
f) applying said classification procedure to said further set to generate said interpretive conclusion, and
g) steps b) and e) being carried out on the same signal routing means thereby substantially eliminating data conditioning errors.

12. A method as claimed in claim 11, wherein the further set of parameters measured in step e) is added to the collection of previous measurement data formed in step b) to form an augmented collection.

13. A method as claimed in claim 12 including the steps of:

h) modifying said classification procedure using said augmented collection, the modified classification procedure being stored in the instrument memory, and
i) at a later time applying the modified classification procedure to said further set to generate a modified interpretive conclusion.

14. A method as claimed in any one of the claims 11 - 13, wherein said collection of previous measurement data is divided into epoch portions based upon the time or times during which said previous measurement data was collected.

15. A method as claimed in any one of claims 11-14 including the step of inputting non-measured data into said sets or further set of parameters.

16. A method as claimed in any one of claims 11 - 15, wherein each said set of parameters comprises a data vector having data values formed from sequential samples.

17. A method as claimed in any one of claims 11 - 15, wherein each said set of parameters comprises a data vector having data values formed from simultaneous samples.

18. A method as claimed in any one of claims 11 - 17, wherein said classification procedures utilises logic selected from the group consisting of ID3 decision trees, neural networks, fuzzy logic, rule based expert systems and logistic regression.

**Patentansprüche**

1. Ein interpretatives Messinstrument, welches aufweist: Computermittel (1), einschließlich eines Speichermittels (3), eines Bildschirmanzeigemittels (10) und zumindest eines Prozessors (2), ein Eingabe-analog-zu-digital-Wandelungsmittel (35-37) mit einer Mehrzahl von Analogsignal-Eingängen, jeder mit Digitalisierungsmitteln damit verbunden und einen entsprechenden digitalen Ausgang bildend, Signal-Routing-Mittel, die mit den digitalen Ausgängen verbunden sind, um die Daten darauf zu dem Speichermittel zu befördern, wobei das Signal-Routing-Mittel durch das Computermittel als eine Zahl zwischenverbundener Icons (101-108; 201-224; 315-320) auf dem Bildschirmanzeigemittel dargestellt ist, in welchem die Zwischenverbindungen zwischen den Icons Signalpfade darstellen und die Icons funktionale Elemente darstellen, von welchen jedes eine vorbestimmte Signalverarbeitungsaufgabe hat, **dadurch gekennzeichnet, dass** ein Klassifizierungsprogramm (108, 318) in dem Signal-Routing-Mittel eingebettet ist und auf die beförderten Daten anwendbar ist, um eine interpretative Schlussfolgerung zu berechnen, basierend auf den beförderten Daten, wobei das Klassifizierungsprogramm historische Daten verwendet, die in dem Speicher gespeichert und darin über die analogen Signaleingänge und Signal-Routing-Mittel eingegeben sind, und dieselbe Signalverarbeitung sowohl für die historischen Daten als auch für Daten, auf welche eine interpretative Messung durchzuführen ist, verwendet wird, wobei Datenaufbereitungsfehler wesentlich eliminiert werden.

2. Instrument nach Anspruch 1, wobei das Speichermittel die beförderten Daten empfängt und die historischen Daten mit denselben ergänzt, um damit die historischen Daten mit jeder durchgeführten Messung zu erweitern.

3. Instrument nach Anspruch 2, wobei das Klassifizierungsprogramm durch die kumulativen historischen Daten, die in dem Speichermittel gespeichert sind, modifiziert ist.

4. Instrument nach Anspruch 2 oder 3, wobei das Speichermittel in Epochen-Abschnitte geteilt ist und die beförderten Daten in verschiedene Epochen-Abschnitte des Speichermittels zugeordnet werden, basierend auf der Zeit oder den Zeiten, während welcher die beförderten Daten erzeugt wurden.

5. Instrument nach irgendeinem der Ansprüche 1 - 4, wobei das Signal-Routing-Mittel ein Multiplexer-Mittel (105) aufweist, um einen Datenvektor zu bilden mit Datenwerten, die aus Daten gebildet sind, die durch das Digitalisierungsmittel auf sequentiellen Proben digitalisiert sind.

6. Instrument nach irgendeinem der Ansprüche 1 - 4, wobei das Signal-Routing-Mittel ein Multiplexer-Mittel (105) aufweist, um einen Datenvektor zu bilden, welcher Datenwerte aufweist, die aus Daten gebildet sind, die durch das Digitalisierungsmittel auf simultanen Proben digitalisiert sind.

7. Instrument nach irgendeinem der Ansprüche 1 - 8, wobei das Signal-Routing-Mittel Eingabemittel für nicht gemessene Daten beinhaltet, wobei Daten, die zu dem Speicher befördert sind, Daten beinhalten, die nicht über die analogen Signaleingänge eingegeben sind.

8. Instrument nach irgendeinem der Ansprüche 1 - 7, wobei das Klassifizierungsprogramm in eine Rückführungs- und/oder Steuerungsschleife eingebettet ist, die einen Teil des Signal-Routing-Mittels bildet.

9. Instrument nach irgendeinem der Ansprüche 1 - 9, wobei das Klassifizierungsprogramm aus der Gruppe bestehend aus ID3-Entscheidungsbäumen und neuronalen Netzwerken ausgewählt ist.

10. Instrument nach irgendeinem der Ansprüche 1 - 8, wobei das Klassifizierungsprogramm eine Logik integriert, die ausgewählt wird aus der Gruppe, bestehend aus Fuzzy-Logik, regelbasiertem Expertensystem und logistischer Regression.

11. Verfahren zum Berechnen einer interpretativen Schlussfolgerung aus einem gemessenen Satz von Parametern unter Verwendung eines interpretativen Messinstrumentes, wie es in Anspruch 1 definiert ist, wobei das Verfahren die Schritte aufweist:

a) Zwischenverbinden einer Mehrzahl der Icons, um das Signal-Routing-Mittel zu bilden,
b) Bilden einer Sammlung vorhergehender Messdaten, wobei jede einen Satz der Parameter aufweist, die zu einer bestimmten Zeit über das Signal-Routing-Mittel gemessen wurden,
c) Zuweisen eines Ergebnisses zu jedem der Sätze in der Sammlung,
d) Schaffen einer Klassifizierungsprozedur unter Verwendung der Sammlung und Speichern derselben in dem Instrumentspeicher,
e) Messen eines weiteren Satzes der Parameter über das Signal-Routing-Mittel,
f) Anwenden der Klassifizierungsprozedur auf den weiteren Satz, um die interpretative Schlussfolgerung zu erzeugen, und
g) wobei die Schritte b) und e) auf demselben Signal-Routing-Mittel ausgeführt werden, wobei Datenaufbereitungsfehler im wesentlichen eliminiert werden.

12. Verfahren nach Anspruch 11, wobei der weitere Satz von Parametern, gemessen im Schritt e), der Sammlung vorhergehender Messdaten, gebildet im Schritt b), hinzugefügt wird, um eine vergrößerte Sammlung zu bilden.

13. Verfahren nach Anspruch 12, welches die Schritte beinhaltet:

  h) Modifizieren der Klassifizierungsprozedur unter Verwendung der erweiterten Sammlung, wobei die modifizierte Klassifizierungsprozedur in dem Instrumentspeicher gespeichert wird, und
  i) zu einem späteren Zeitpunkt, Anwenden der modifizierten Klassifizierungsprozedur auf den weiteren Satz, um eine modifizierte interpretative Schlussfolgerung zu erzeugen.

14. Verfahren nach irgendeinem der Ansprüche 11 - 13, wobei die Sammlung vorhergehender Messdaten in Epochen-Abschnitte geteilt wird, basierend auf der Zeit oder den Zeiten, während derer die vorhergehenden Messdaten gesammelt wurden.

15. Verfahren nach irgendeinem der Ansprüche 11 - 14, welches den Schritt eines Eingebens von nicht gemessenen Daten in die Sätze oder den weiteren Satz von Parametern beinhaltet.

16. Verfahren nach irgendeinem der Ansprüche 11 - 15, wobei jeder Satz von Parametern einen Datenvektor aufweist, welcher Datenwerte aufweist, die aus sequentiellen Proben gebildet sind.

17. Verfahren nach irgendeinem der Ansprüche 11 - 15, wobei jeder Satz von Parametern einen Datenvektor aufweist, welcher Datenwerte aufweist, die aus simultanen Proben gebildet sind.

18. Verfahren nach irgendeinem der Ansprüche 11 - 17, wobei die Klassifizierungsprozeduren eine Logik verwenden, die aus der Gruppe, bestehend aus ID3-Entscheidungsbäumen, neuronalen Netzwerken, Fuzzy-Logik, regelbasierten Expertensystemen und logistischer Regression ausgewählt ist.

**Revendications**

1. Elément de mesure interprétatif comprenant des moyens formant ordinateur (1) incluant des moyens de mémoire (3), des moyens formant dispositif d'affichage à écran (10) et au moins un processeur (2), des moyens de conversion analogique/numérique d'entrée (36-37) possédant une pluralité d'entrées de signaux analogiques, pourvues chacune de moyens de numération qui y sont raccordés et former un signal de sortie numérique correspondant, des moyens d'acheminement de signaux connectés auxdites sorties numériques pour convoyer les données dans ces moyens jusqu'auxdits moyens de mémoire, lesdits moyens d'acheminement de signaux étant représentés par lesdits moyens formant ordinateur sous la forme d'un nombre d'icônes interconnectées (101-108; 201-224; 315-320) sur lesdits moyens d'affichage à écran, dans lesquels les interconnexions entre lesdites icônes représentent des trajets de signaux et les icônes représentent des éléments fonctionnels possédant chacun une tâche prédéterminée de traitement de signaux, **caractérisé en ce qu'**un programme de classification (108-318) est inséré dans lesdits moyens d'acheminement de signaux et peut agir sur lesdites données convoyées pour calculer une conclusion interprétative basée sur lesdites données convoyées, ledit programme de classification utilisant des données historiques mémorisées dans ladite mémoire et introduites dans cette dernière par l'intermédiaire desdites entrées de signaux analogiques et desdits moyens d'acheminement de signaux, et le même traitement de signaux est utilisé à la fois pour lesdites données historiques et pour des données, sur lesquelles une mesure interprétative doit être exécutée, ce qui permet d'éliminer de façon substantielle des erreurs de conditionnement de données.

2. Instrument selon la revendication 1, dans lequel lesdits moyens de mémoire reçoivent lesdites données convoyées et complètent lesdites données historiques avec ces données pour augmenter ainsi lesdites données historiques lors de chaque mesure exécutée.

3. Instrument selon la revendication 2, dans lequel ledit programme de classification est modifié par les données historiques cumulées mémorisées dans lesdits moyens de mémoire.

4. Instrument selon la revendication 2 ou 3, dans lequel lesdits moyens de mémoire sont divisés en des parties correspondant à des époques et lesdites données convoyées sont affectées à différentes parties correspondant à des époques desdits moyens de mémoire sur la base de la ou des durées, pendant lesquelles lesdites données convoyées ont été produites.

5. Instrument selon l'une quelconque des revendications 1 à 4, dans lequel lesdits moyens d'acheminement de signaux comprennent des moyens formant multiplexeur (105) servant à former un vecteur de données comportant des valeurs de données formées à partir de données numérisées par lesdits moyens de numérisation sur des échantillons séquentiels.

6. Instrument selon l'une quelconque des revendications 1 à 4, dans lequel lesdits moyens d'acheminement de signaux comprennent des moyens formant multiplexeurs (105) pour former un vecteur de données comportant des valeurs de données formées à partir de données numérisées par lesdits moyens de numérisation sur des échantillons simultanés.

7. Instrument selon l'une quelconque des revendications 1 à 8, dans lequel lesdits moyens d'acheminement de signaux incluent des moyens d'entrée de données non mesurées, ce qui a pour effet que des données convoyées jusqu'à ladite mémoire incluent des données non introduites par l'intermédiaire desdites entrées de signaux analogiques.

8. Instrument selon l'une quelconque des revendications 1 à 7, dans lequel ledit programme de classification est inséré dans une boucle de réaction et/ou de commande faisant partie desdits moyens d'acheminement de signaux.

9. Instrument selon l'une quelconque des revendications 1 à 9, dans lequel ledit programme de classification est sélectionné dans le groupe comprenant des arbres de décision ID3 et des réseaux neuronaux.

10. Instrument selon l'une quelconque des revendications 1 à 8, dans lequel ledit programme de classification incorpore une logique sélectionnée à partir du groupe comprenant une logique floue, des systèmes experts basés sur des règles et une régression logistique.

11. Procédé pour calculer une conclusion interprétative à partir d'un ensemble mesuré de paramètres moyennant l'utilisation d'un instrument de mesure interprétatif tel que défini dans la revendication 1, ledit procédé comprenant les étapes consistant à:

    a) interconnecter une pluralité desdites icônes pour former lesdits moyens d'acheminement de signaux,
    b) former un groupe de données de mesure précédente comprenant chacun un ensemble desdits paramètres mesurés par l'intermédiaire desdits moyens d'acheminement de signaux à un instant particulier,
    c) affecter un résultat à chacun desdits ensembles dans ledit groupe,
    d) créer une procédure de classification utilisant ledit groupe et mémoriser le nom dans la mémoire de l'instrument,
    e) mesurer un autre ensemble desdits paramètres par l'intermédiaire desdits moyens d'acheminement de signaux,
    f) appliquer ladite procédure de classification audit autre ensemble pour produire ladite conclusion interprétative, et
    g) les étapes b) et e) étant exécutées sur les mêmes moyens d'acheminement de signaux, ce qui supprime pour l'essentiel des erreurs de conditionnement de données.

12. Procédé selon la revendication 11, selon lequel l'autre ensemble de paramètres mesuré lors de l'étape e) est ajouté à l'ensemble de données de mesure précédent formé lors de l'étape b) pour former un groupe augmenté.

13. Procédé selon la revendication 12, incluant les étapes consistant à:

    h) modifier ladite procédure de classification en utilisant ledit groupe augmenté, la procédure de classification modifiée étant mémorisée dans la mémoire de l'instrument, et
    i) à un instant ultérieur, appliquer la procédure classification modifiée pour ledit autre ensemble de manière à produire une conclusion interprétative modifiée.

14. Procédé selon l'une quelconque des revendications 11-13, selon lequel ledit groupe de données de mesure précédentes est divisé en des parties correspondant à des époques sur la base de la ou des durées, pendant lesquelles lesdites données de mesure précédentes ont été collectées.

15. Procédé selon l'une quelconque des revendications 11 à 14, incluant l'étape consistant à introduire des données non mesurées dans lesdits ensembles ou dans l'autre ensemble de paramètres.

16. Procédé selon l'une quelconque des revendications 11 à 15, dans lequel chacun desdits ensembles de paramètres comprend un vecteur de données possédant des valeurs de données formées à partir d'échantillons séquentiels.

17. Procédé selon l'une quelconque des revendications 11 à 15, selon lequel chacun desdits ensembles de paramètres comprend un vecteur de données comportant des valeurs de données formées à partir d'échantillons simultanés.

18. Procédé selon l'une quelconque des revendications 11 à 17, selon lequel lesdites procédures de classification utilisent une logique sélectionnée à partir du groupe comprenant des arbres de décision ID3, des réseaux neuronaux, une logique floue, des systèmes expert basés sur des règles et une régression logistique.

FIG. 1

FIG. 5

FIG. 2

ADDER

SUBTRACT

MULTIPLY

DIVIDE

TRIGGERED "TO DISK" LOGGER

TRIGGERED "FROM DISK" TO COMPARE

SCROLLING WINDOW PLACED ANYWHERE

TRIGGERED WINDOW

LOW PASS IIR FILTER - 40dB PER DECADE

HIGH PASS IIR FILTER - 40dB PER DECADE

BANDPASS FILTR. EACH EDGE - 40dB PER DECADE

SAMPLE AND HOLD

AND GATE INVERTING INPUT

ISOLATING AMPLIFIER 120dB PROG. GAIN

SINE WAVE VCO

RAMP VCO

SQUARE WAVE VCO

TRIGGERED STIMULUS

SOFTWARE AMPLIFIER ATTENUATOR

CONSTANT OFFSET

DIFFER- ENTIATOR

INTERGRATOR

ANALOG OUTPUT

VOLTAGE REF

MULTIPLEXER

TRIGGERED SIGNAL AVERAGER

FIG. 3

ACCELEROMETER INPUT

TAKE AVERAGE WITH LOW PASS FILTER

106

∫dT

CHAVG

101A

RECTIFY

107

STATOR CURRENT

101B

104

103

102

SET POINT AT
ORIG CHAVG

108

ID3

ACCELERATION
SWITCH

104

103

105

101C

ROTOR CURRENT

101D

104

103

AUDIBLE NOISE

LATCH IF GREATER
THAN CURRENT VALUE

FIG. 4

19

FIG. 6

UNTITLED | X : | +OHMS | Y : | +0.0

+8
+6
+4
+2

-2
-4
-6
-8

+50 ms / div

EXAMPLES | A | B | C | D
+0136 | +0 | +2 | +0 | +5

ID3 CLASS | ERRORS | % ERRORS
+3 | +0005 | +03.67

*FIG. 7*

FIG. 8

EP 0 715 738 B1

FIG. 9

FIG. 10

EP 0 715 738 B1